Europäisches Patentamt

European Patent Office

Office européen des brevets

(11) Numéro de publication: **0 223 640**
**B1**

## (12) FASCICULE DE BREVET EUROPEEN

(45) Date de publication du fascicule du brevet:
24.05.89

(51) Int. Cl.⁴: **B 60 D 1/00,** B 60 D 1/14,
B 62 D 13/02

(21) Numéro de dépôt: **86402148.0**

(22) Date de dépôt: **01.10.86**

(54) Véhicule remorquable comprenant un dispositif d'attelage extensible.

(30) Priorité: **09.10.85 FR 8514953**

(43) Date de publication de la demande:
**27.05.87 Bulletin 87/22**

(45) Mention de la délivrance du brevet:
**24.05.89 Bulletin 89/21**

(84) Etats contractants désignés:
**AT BE CH DE ES FR GB GR IT LI LU NL SE**

(56) Documents cités:
**EP-A- 0 176 442**
**DE-A- 3 150 335**
**DE-A- 3 207 724**
**DE-A- 3 405 530**

(73) Titulaire: **Jeanson, René Henri, Rue de la Cour AUZAY,
F-85200 Fontenay le Comte (FR)**
Titulaire: **Lamothe, Guy, Rue Gallot, F- 85200 Fontenay
le Comte (FR)**

(72) Inventeur: **Jeanson, René Henri, Rue de la Cour AUZAY,
F-85200 Fontenay le Comte (FR)**
Inventeur: **Lamothe, Guy, Rue Gallot, F- 85200 Fontenay
le Comte (FR)**

(74) Mandataire: **Lemoine, Robert, Cabinet
Malémont 42, Avenue du Président Wilson,
F-75116 Paris (FR)**

**Description**

La présente invention concerne un véhicule remorquable comprenant un dispositif d'attelage extensible apte à être relié à l'arrière d'un autre véhicule, ce dispositif d'attelage comportant un circuit hydraulique pourvu d'un clapet normalement fermé, des moyens de détection oblongs formant un angle déterminé avec la verticale lorsque les axes longitudinaux des deux véhicules sont parallèles, une tringlerie reliant les moyens de détection au clapet et apte à ouvrir ce dernier lorsque l'angle formé par les moyens de détection avec la verticale diminue sous l'action de l'autre véhicule, et un fluide sous pression pour permettre l'allongement du dispositif d'attelage lorsque le clapet est ouvert. Un tel véhicule est décrit dans le document EP-A1-0 176 442 [publié le 02.04.1986; état de la technique selon Art. 54 (3) CBE].

Les dispositifs d'attelage extensibles que l'on trouve actuellement sur le marché permettent de réduire la distance entre deux véhicules attelés à seulement une vingtaine de centimètres, tout en évitant que ces véhicules se heurtent lorsqu'ils négocient des virages.

A la suite de certaines manoeuvres particulièrement délicates, il arrive que le véhicule de tête forme un angle d'environ 90° avec le véhicule remorqué et que son extrémité arrière vienne contre les moyens de détection en les soumettant à une poussée transversale, c'est-à-dire dirigée perpendiculairement à l'axe longitudinal du véhicule remorqué. Cette situation pose toutefois des problèmes car le véhicule de tête risque de détériorer les moyens de détection et de mettre ainsi hors d'usage le dispositif d'attelage extensible.

La présente invention se propose plus particulièrement de remédier à cet inconvénient et, pour ce faire, elle a pour objet un véhicule remorquable du type susmentionné qui se caractérise en ce que les moyens de détection comprennent au moins un arbre horizontal relié à la tringlerie et déplaçable axialement sur le véhicule remorquable, perpendiculairement à l'axe longitudinal de celui-ci, et en ce que des moyens de rabattement sont prévus pour faire pivoter l'arbre horizontal autour de son axe longitudinal, de manière à rabattre les moyens de détection contre le véhicule remorquable lorsque l'arbre horizontal est déplacé axialement.

Le véhicule de tête ne risque plus maintenant de détériorer le dispositif d'attelage extensible. En effet, s'il venait à exercer une poussée tranversale sur les moyens de détection, l'arbre horizontal coulisserait axialement tandis que les moyens de rabattement obligeraient ce dernier à tourner autour de son axe longitudinal dans le sens correspondant à une diminution de l'angle formé par les moyens de détection avec la verticale. Par suite, la tringlerie ouvrirait le clapet et permettrait un allongement du dispositif d'attelage, ce qui assurerait un éloignement du véhicule de tête du véhicule remorqué et supprimerait par conséquent l'action de poussée du premier sur le second.

Avantageusement, l'arbre horizontale comporte deux surépaisseurs espacées axialement l'une de l'autre et deux bagues coulissantes insérées entre les surépaisseurs et contre lesquelles prend appui un ressort hélicoïdal comprimé, les bagues s'appuyant contre les surépaisseurs et contre deux butées fixes lorsque l'arbre horizontal est dans sa position normale de repos.

Grâce à ce montage, le ressort peut solliciter l'arbre horizontal dans sa position normale de repos quel que soit le côté à partir duquel le véhicule de tête exerce sa poussée sur les moyens de détection.

Selon un mode de réalisation particulier de l'invention, les moyens de rabattement comprennent un galet prévu à l'extrémité libre d'une patte solidaire en rotation de l'arbre horizontal, et une came fixe ayant une surface de came formée de deux tronçons ménageant un V entre eux, le galet faisant face au sommet du V tant que l'arbre horizontal n'est pas déplacé et faisant pivoter ce dernier, de manière à rabattre les moyens de détection contre le véhicule remorquable, en coopérant avec l'un des tronçon de la surface de came lorsque l'arbre horizontal est déplacé dans un sens et avec l'autre tronçon de la surface de came lorsque l'arbre horizontal est déplacé dans l'autre sens.

De préférence, la patte est portée par un manchon monté à rotation sur l'arbre horizontal et immobilisable sur ce dernier dans un certain nombre de positions prédéterminées.

Grâce à cette disposition, la valeur de l'angle formé par les moyens de détection avec la verticale peut, comme on le verra ci-après, être facilement modifiée en fonction des véhicules attelés, de l'itinéraire à emprunter, de l'état de la route, et même du conducteur, ce qui améliore nettement la sécurité.

Pour ne pas compliquer la structure des moyens de détection, le manchon est avantageusement immobilisé sur l'arbre horizontal par des moyens de verrouillage comprenant un élément fileté traversant deux lumières oblongues réalisées l'une en face de l'autre dans le manchon, perpendiculairement à l'axe de celui-ci, et un perçage diamétral réalisé dans l'arbre horizontal, ainsi qu'un écrou destiné à être vissé sur l'élément fileté pour solidariser le manchon et l'arbre horizontal.

Il suffit bien entendu de serrer l'écrou pour rendre le manchon solidaire de l'arbre horizontal et de le desserrer pour permettre au manchon de tourner autour de l'arbre horizontal.

Selon un premier mode de réalisation, l'arbre horizontal est relié par au moins un bras à une tringle qui lui est parallèle ou sensiblement parallèle et qui est pourvue à chacune de ses extrémités d'un galet de roulement dont l'axe de rotation est vertical ou sensiblement vertical.

On notera ici que les galets de roulement sont prévus pour limiter les forces de frottement s'exerçant entre la tringle et le véhicule de tête lors de la négociation des virages et protéger ainsi les moyens de détection contre une usure intempestive.

Selon un second mode de réalisation, l'arbre horizontal supporte un bâti qui lui est parallèle ou sensiblement parallèle et qui est pourvu d'un rouleau à chacune de ses extrémités, les axes de rotation des rouleaux étant perpendiculaires ou sensiblement perpendiculaires à l'arbre horizontal.

Les rouleaux, qui sont également prévus pour limiter les forces de frottement entre le bâti et le véhicule de tête, ont l'avantage sur les galets de roulement de mieux protéger les moyens de détection contre une détérioration accidentelle lorsque le véhicule de tête vient contre ces derniers alors qu'il forme un angle de l'ordre de 90° avec le véhicule remorqué.

Deux modes d'exécution de la présente invention seront décrits ci-après à titre d'exemples nullement limitatifs en référence aux dessins annexés dans lesquels:

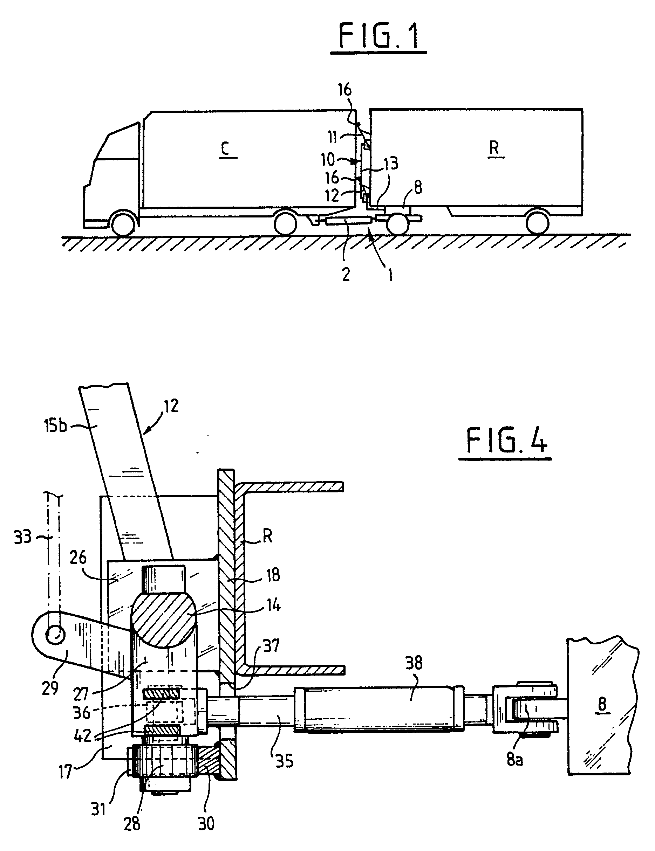

. la figure 1 est une vue de côté schématique d'un camion à l'arrière duquel est attelée une remorque équipée d'un dispositif d'attelage comportant des moyens de détection conformes à un premier mode de réalisation;

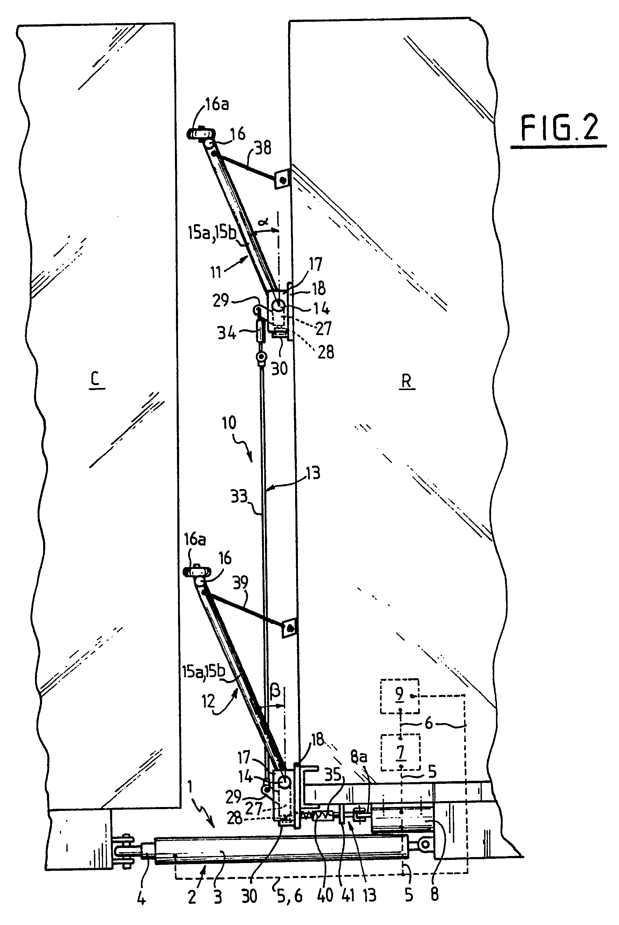

. la figure 2 est une vue de côté à échelle agrandie de l'arrière du camion, de l'avant de la remorque et du dispositif d'attelage visibles sur la figure 1;

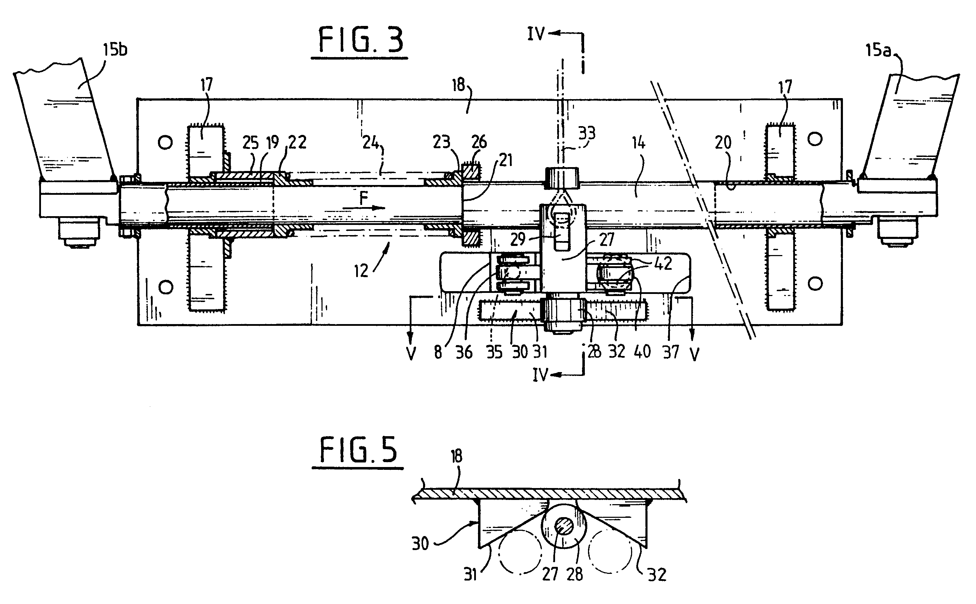

. la figure 3 est une vue de face, à échelle agrandie et en coupe partielle, de l'extrémité inférieure du détecteur inférieur du dispositif d'attelage visible sur la figure 2;

. la figure 4 est une vue en coupe à échelle agrandie effectuée selon la ligne IV-IV de la figure 3;

. la figure 5 est une vue en coupe effectuée selon la ligne V-V de la figur 3;

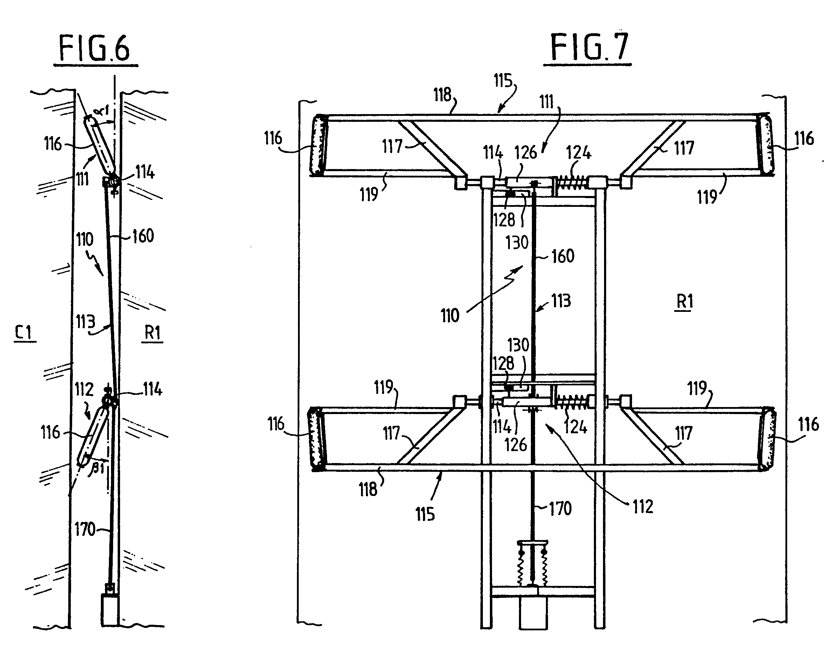

. la figure 6 est une vue de côté schématique et partielle d'un dispositif d'attelage comportant des moyens de détection conformes à un second mode de réalisation cette figure représentant également l'arrière d'un camion et l'avant d'une remorque équipée de ce dispositif d'attelage;

. la figure 7 est une vue schématique et partielle de l'avant de la remorque équipée du dispositif d'attelage visible sur la figure 6;

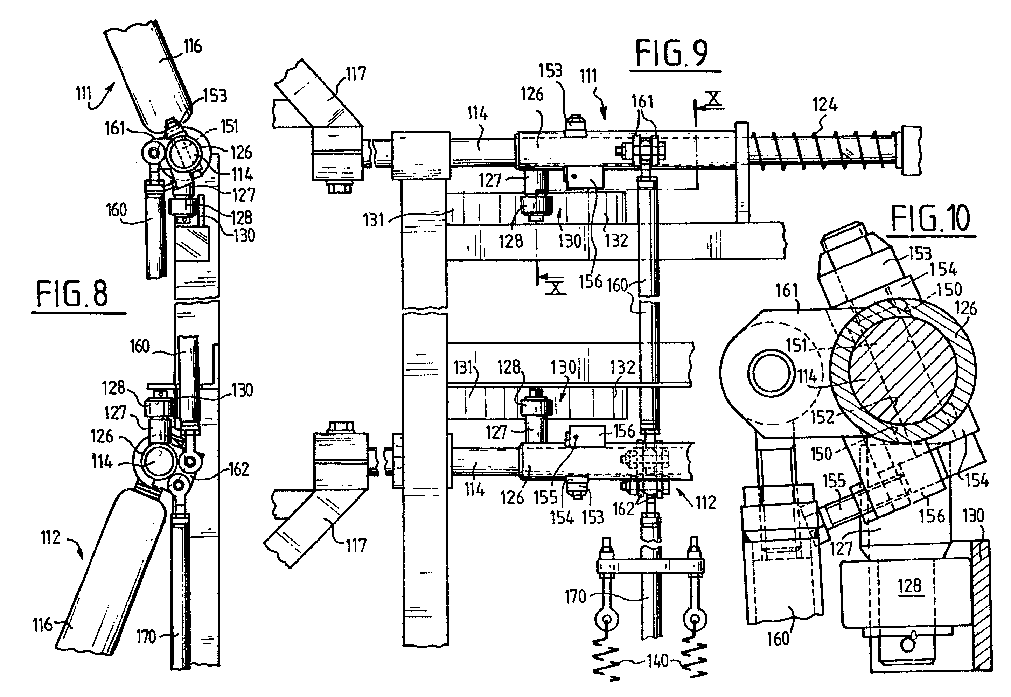

. la figure 8 est une vue de côté partielle et à échelle agrandie des moyens de détection visibles sur la figure 6;

. la figure 9 est une vue de face partielle et à échelle agrandie des moyens de détection visibles sur la figure 7; et

. la figure 10 est une vue en coupe à échelle agrandie effectuée selon la ligne X-X de la figure 9.

L'ensemble routier que l'on peut voir sur la figure 1 est constitué d'un camion C à l'arrière duquel est attelée une remorque R dont le train avant est pourvu d'un dispositif d'attelage extensible 1.

Le dispositif d'attelage 1 permet de maintenir l'avant de la remorque à seulement 20 ou 30 centimètres de l'arrière du camion lorsque l'ensemble routier se déplace en ligne droite. Il comprend d'une manière connue en soi un vérin hydraulique 2 dont le cylindre 3 est articulé sur le train avant de la remorque et dont la tige de piston 4 est accrochée de manière amovible à l'arrière du camion, un circuit hydraulic (représenté en tirets sur la figure 2) comprenant deux conduites 5, 6 reliant le vérin 2 à un réservoir à fluide hydraulique 7, la conduite 5 étant pourvu d'un clapet 8 normalement fermé et la conduite 6 d'une pompe 9, des moyens de détection 10 conformés pour commander l'ouverture du clapet 8 lorsque les axes longitudinaux du camion et de la remorque forment un certain angle entre eux, et un fluide sous pression, de préférence de l'air comprimé, destiné à refouler dans le réservoir 7, lorsque le clapet 8 est ouvert, le fluide hydraulique contenu dans le vérin 2, ce fluide permettant l'allongement du dispositif d'attelage en faisant sortir la tige de piston 4 du cylindre 3.

Pour obtenir plus d'informations sur les moyens mis en oeuvre pour commander l'allongement du dispositif d'attelage 1, on pourra avantageusement se reporter à la demande de brevet européen no. 85.401842.1 déposée le 23 septembre 1985 et publiée sous le no. 0 176 442.

Dans le mode de réalisation représenté sur les figures 1 à 5, les moyens de détection 10 comprennent deux détecteurs 11, 12 situés respectivement à la partie supérieure et à la partie inférieure de l'espace ménagé entre le camion et la remorque, ainsi qu'une tringlerie 13 reliant les détecteurs 11, 12 au tiroir 8a du clapet 8.

Les détecteurs 11, 12 forment respectivement des angles $\alpha$ et $\beta$ (identiques ou légèrement différents) avec la verticale lorsque les axes longitudinaux du camion et de la remorque sont parallèles. Ils comprennent chacun un arbre horizontal 14, deux bras 15a, 15b dont les extrémités inférieures sont solidaires de l'arbre 14 (voir la figure 3), et une tringle transversale 16 portée par les bras 15a, 15b et dont les extrémités, qui s'avancent sensiblement jusqu'au niveau des parois longitudinales de la remorque, portent des galets de roulement 16a destinés à faciliter le mouvement de détecteur correspondant contre le camion, les axes de rotation de ces galets étant verticaux ou sensiblement verticaux.

Les arbres 14 traversent chacun avec un faible jeu deux pattes verticales 17 solidaires d'une platine verticale 18 fixée sur la face antérieure de la caisse de la remorque. Ils s'étendent perpendiculairement à l'axe longitudinal de celle-ci et sont déplaçables axialement. Pour faciliter leur coulissement à l'intérieur des pattes 17, ils sont pourvus sur les parties de leur périphérie qui sont adjacentes auxdites pattes 17, de manchons 19, 20 constitués d'un matériau anti-friction approprié.

Chacun des arbres 14 comporte un tronçon de section réduite (visible sur la figure 3) dont les extrémités sont situées l'une au niveau d'un épaulement 21 et l'autre au niveau de l'extrémité du manchon 19 qui est tournée vers l'épaulement 21.

Deux bagues 22, 23 sont montées coulissantes sur le tronçon de section réduite de chacun des arbres 14 et sont sollicitées la première contre le manchon 19 et la seconde contre l'épaulement 21 par un ressort hélicoïdal 24 comprimé entre elles.

Lorsqu'un bras 14 est dans sa position normale de repos, son manchon 19 et son épaulement 21 font face à deux butées 25, 26 solidaires de la platine 18, tandis que ses bagues 22, 23 s'appuient la première contre le manchon 19 et la butée 25 et la seconde contre l'épaulement 21 et la butée 26.

Si maintenant cet arbre est soumis à l'action d'une poussée transversale le déplaçant dans le sens de la flèche F sur la figure 3, sa bague 23 reste en appui contre la butée 26 tandis que sa bague 22 est eintraînée par le manchon 19 qui l'éloigne de la butée 25 et comprime ainsi le ressort 24.

En revanche, s'il est soumis à l'action d'une poussée transversale le déplaçant dans le sens inverse de la flèche F, sa bague 22 reste en appui contre la butée 25 alors que sa bague 23 est entraînée par l'épaulement 21 qui l'éloigne de la butée 26 et comprime le ressort 24.

On notera que dans les deux cas ci-dessus, le ressort 24 rappellera l'arbre 14 dans sa position normale de repos dès que celui-ci ne sera plus soumis à une pousée.

Comme le montre par ailleurs la figure 2, les arbres 14 sont pourvus d'une patte 27 faisant saillie vers le bas et se terminant par un galet 28 ainsi que d'une patte 29 faisant saillie sur la partie antérieure de leur patte 27 et dont le rôle sera précisé ci-après.

Les galets 28 sont situés chacun devant une came 30 solidaire de la platine adjacente 18 et pourvue d'une surface de came verticale formée de deux tronçons rectilignes 31, 32 ménageant un V entre eux (voir en particulier la figure 5). Ils sont en face du sommet du V ménagé par les tronçons 31, 32 de la surface de came correspondante lorsque l'arbre 14 qui les porte est dans sa position normale de repos. Par contre, ils coopèrent avec l'un ou l'autre des tronçons 31, 32 de la surface de came correspondante selon que l'arbre qui les porte est déplacé dans le sens de la flèche F ou dans le sens inverse, et permettent le rabattement du détecteur correspondant contre la paroi transversale antérieure de la remorque en faisant pivoter ledit arbre autour de son axe longitudinal.

La tringlerie 13 dont il a été question ci-dessus est constituée par un câble 33 reliant les pattes 29 des arbres 14 des deux détecteurs 11, 12 et dont la tension est réglée par l'intermédiaire d'un dispositif approprié 34 connu en soi, ainsi que par un bras 35 reliant le tiroir 8a du clapet 8 à une patte latérale 36 fixée sur la patte 27 de l'arbre 14 du détecteur inférieur 12 (voir la figure 3).

En se référant plus particulièrement à la figure 4, on remarquera que le bras 35 traverse une ouverture 37 ménagée dans la platine 18 assurant la fixation du détecteur inférieur 12 sur la remorque et qu'il est pourvu d'un dispositif connu en soi 38 permettant de régler sa longueur.

Par ailleurs, en se référant à la figure 2, on constatera que les détecteurs 11 et 12 sont maintenus dans les positions dans lesquelles ils forment les angles α et β avec la verticale par des haubans 38, 39 reliant leurs bras 15a, 15b à la caisse de la remorque, ces haubans étant tendus sous l'action d'un ressort de rappel 40 lui-même tendu entre une patte 41 fixée sous le châssis de la remorque et une chape latérale 42 fixée sur la patte 27 de l'arbre du détecteur inférieur 12, du côté opposé à la patte latérale 36 qui est reliée au bras 35 (voir en particulier la figure 3).

On va maintenant décrire le fonctionnement des moyens de détection conformes à l'invention.

Lorsque l'ensemble routier négocie un virage ou lorsque le camion et la remorque s'inclinent l'un par rapport à l'autre autour d'un axe perpendiculaire à leur axe longitudinal, l'arrière du camion se rapproche de l'avant de la remorque, vient en contact avec l'une au moins des tringles transversales 16 et la repousse en direction de la remorque. L'arbre 14 du détecteur correspondant pivote alors autour de son axe longitudinal de telle sorte que l'angle formé par ce détecteur avec la verticale diminue. Par suite, la patte 29 de l'arbre en cause exerce une traction vers le haut sur la partie de la tringlerie 13 qui la relie au tiroir du clapet 8 et commande ainsi l'ouverture de ce dernier. Le fluide sous pression peut donc refouler dans le réservoir 7 le fluide hydraulique contenu dans le vérin 2 et permettre l'allongement du dispositif d'attelage en faisant sortir la tige de piston 4 du cylindre 3 de ce vérin. Puis, lorsque la distance entre le camion et la remorque devient suffisante, le détecteur correspondant revient dans sa position d'origine sous la force de rappel du ressort 40 tandis que le clapet se referme.

Si l'on suppose maintenant que l'arrière du camion exerce sur l'une des tringles 16 une poussée transversale ayant la direction de la flèche F sur la figure 3, l'arbre 14 du détecteur correspondant coulisse dans la même direction tandis que le galet 28 qu'il porte coopère avec le tronçon 32 de la surface de came correspondante et le contraint à pivoter autour de son axe longitudinal dans le sens eintraînant une diminution de l'angle formé par le détecteur correspondant avec la verticale. La patte 29 de cet arbre 14 exerce alors une traction vers le haut sur la partie de la tringlerie 13 qui la relie au clapet 8 et commande ainsi l'ouverture de ce dernier. Le dispositif d'attelage peut par suite s'allonger sous l'action du fluide sous pression, ce qui permet d'annuler la poussée transversale qu'exerçait le camion sur la tige 16 du détecteur en cause.

Bien entendu, lorsque la distance entre le camion et la remorque devient suffisante, l'arbre correspondant 14 revient dans sa position normale de repos sous l'action de son ressort 24 tandis que les détecteurs 11 et 12 reforment respectivement les angles α et β avec la verticale sous l'action du ressort 40 et que le clapet 8 se referme.

Dans le cas où l'arrière du camion exerce sur l'une des tringles 16 une poussée transversale dirigée dans le sens inverse de la flèche F, tout se passe comme décrit ci-dessus, sauf que le galet 28 coopère avec le tronçon 31 de la surface de came correspondante et non plus avec le tronçon 32 de celle-ci. Il est donc tout à fait inutile de redécrire ici le fonctionnement du dispositif d'attelage et de ses éléments constitutifs.

On va maintenant décrire la structure des moyens de détection 110 du mode de réalisation représenté sur les figures 6 à 10.

En se référant tout d'abord aux figures 6 et 7, on remarquera que ces moyens comprennent eux aussi deux détecteurs 111, 112 situés respectivement à la partie supérieure et à la partie inférieure de l'espace ménagé entre le camion C1 et la remorque R1, ainsi qu'une tringlerie 113 reliant les détecteurs 111, 112 au tiroir du clapet (non représenté sur les figures 6 à 8) du circuit hydraulique visible sur la figure 2.

Les détecteurs 111, 112 forment respectivement des angles α1, β1 avec la verticale lorsque les axes longitudinaux du camion C1 et de la remorque R1 sont parallèles. Ils comprennent chacun un arbre 114 supportant un bâti 115 s'étendant sensiblement jusqu'au niveau des parois longitudinales de la remorque.

Comme le montre clairement la figure 7, les bâtis 115 sont pourvus, à chacune de leurs extrémités, d'un rouleau 116 dont l'axe de rotation est perpendiculaire ou sensiblement perpendiculaire à l'arbre horizontal correspondant 114. Plus précisément, ces bâtis sont constitués de deux bras inclinés 117 fixés aux extrémités de l'arbre 114 qui les supporte, d'une tringle 118 fixée aux extrémités des bras 117 et de deux tringles coaxiales 119 fixées parallèlement à la tringle 118 sur les bras 117, à proximité de l'arbre 114.

Les arbres 114, qui s'étendent perpendiculairement à l'axe longitudinal de la remorque, sont déplaçables axialement à l'encontre de la force de rappel d'un ressort hélicoïdal 124 dont le montage est le même que celui du ressort 24 décrit en référence au mode de réalisation représenté sur les figures 1 à 5. On ne décrira donc pas ici le montage du ressort hélicoïdal 124, ni sa fonction qui est la même que celle du ressort 24.

En se référant maintenant aux figures 8 à 10, on remarquera que les arbres 114 supportent à rotation un manchon 126 pourvu d'une patte 127 se terminant par un galet 128.

Les manchons 126 comportent chacun deux lumières oblongues 150 réalisées l'une en face de l'autre, perpendiculairement à leur axe longitudinal et sont immobilisables sur l'arbre 114 qui les porte dans une position prédéterminée à l'intérieur d'une plage délimitée par la longueur des lumières oblongues 150.

Leur immobilisation peut être assurée par un boulon 151 traversant leurs lumières oblongues 150 et un perçage diamétral 152 réalisé dans l'arbre correspondant 114, ainsi que par un écrou 153 vissé sur la tige de boulon. Deux rondelles 154 enfilées sur la tige du boulon 151 et prenant appui contre le manchon l'une sous l'action de la tête du boulon et l'autre sous celle de l'écrou 153 sont prévues pour améliorer la qualité du serrage.

On conçoit aisément qu'en desserrant les écrous 153, on peut faire tourner les manchons 126 autour des arbres 114 sur une distance angulaire délimitée par la longueur des fentes oblongues 150, et qu'il suffit de resserrer les écrous 153 après avoir fait tourner judicieusement les manchons pour immobiliser ces derniers dans la position adéquate.

On notera ici que la rotation des manchons 126 sur les arbres 114 peut être assurée de manière simple, après desserrage des écrous 153, en faisant tourner deux boulons 155 vissés dans des pattes 156 fixées sur les manchons 126 et s'appuyant contre les têtes des boulons 151.

En ce qui concerne les galets 128, ils sont situés chacun devant une came 130 semblable aux cames 30 décrites en référence au mode de réalisation représenté sur les figures 1 à 5, c'est-à-dire comportant deux tronçons rectilignes 131, 132 ménageant un V entre eux. Ils sont en face du sommet du V ménagé par les tronçons 131, 132 de la came correspondante lorsque l'arbre 114 qui les porte est dans sa position normale de repos et coopèrent avec l'un ou l'autre des tronçons 131, 132 de la came correspondante selon que l'arbre correspondant 114 est déplacé axialement dans l'un ou l'autre sens.

Comme le montre par ailleurs clairement la figure 9, les galets 128 et les cames 130 sont situés dans l'espace ménagé entre les deux arbres 114.

Pour être complet, on précisera que la tringlerie 113 comprend une première bielle 160 dont les extrémités sont attelées à des chapes 161, 162 fixées respectivement sur les manchons supérieur et inférieur 126, et une seconde bielle 170 dont l'extrémité supérieure est attelée à la chape 162 et dont l'extrémité inférieure (non représentée) peut être reliée au tiroir du clapet 8 du circuit hydraulique visible sur la figure 2, soit directement, soit par l'intermédiaire d'un bras tel que celui désigné en 35 sur les figures 2 à 4, soit par l'intermédiaire d'une commande à distance sous gaine.

En se référant à nouveau aux figures 8 et 9, on remarquera que la chape 161 fait saillie sur la partie antérieure du manchon supérieur 126 alors que la chape 162 fait saillie sur la partie postérieure du manchon inférieur 126. On remarquera également que les bâtis 115 des détecteurs 111 et 112 sont symétriques ou sensiblement symétriques par rapport à un plan horizontal.

En se référant maintenant aux figures 6 et 7, on remarquera que le galet 128 du détecteur 111 s'appuie contre la came correspondante 130 sous le poids de ce dernier ainsi que sous l'action des ressorts de rappel 140 qui ont la même fonction que celle du ressort 40 décrit en référence au mode de réalisation représenté sur les figures 1 à 5.

On précisera enfin à toutes fins utiles que la valeur des angles $\alpha 1$ et $\beta 1$ formés par les détecteurs 111 et 112 avec la verticale peut être réglée en faisant tourner les manchons 126 sur les arbres 114 et en les immobilisant dans la position choisie en serrant les écrous 153 sur les boulons 151.

Le fonctionnement des moyens de détection 111 et 112 étant le même que celui des moyens de détection du mode de réalisation selon les figures 1 à 5, on s'abstiendra de le décrire ici.

Les dispositif d'attelage extensibles représentés sur les dessins et décrits ci-dessus comportent deux détecteurs situés l'un à la partie supérieure et l'autre à la partie inférieure de l'espace compris entre le camion et la remorque. Il va de soi cependant que l'on ne sortirait pas du cadre de la présente invention si l'on supprimait par exemple le détecteur supérieur du mode de réalisation représenté sur les figures 1 à 5 ou le détecteur inférieur du mode de réalisation représenté sur les figures 6 à 10.

De même, on resterait dans le cadre de la présente invention si l'on adaptait le dispositif d'attelage qui a été décrit ici, non plus sur une remorque attelée à un camion mais sur une semi-remorque dont l'avant est monté pivotant sur un tracteur.

## Revendications

1. Véhicule remorquable (R; R1) comprenant un dispositif d'attelage extensible (1) apte à être relié à l'arrière d'un autre véhicule (C; C1), ce dispositif d'attelage comportant un circuit hydraulique pourvu d'un clapet (8) normalement fermé, des moyens de détection oblongs (10; 110) formant un angle déterminé avec la verticale lorsque les axes longitudinaux des deux véhicules sont parallèles, une tringlerie (13; 113) reliant les moyens de détection (10; 110) au clapet (8) et apte à ouvrir ce dernier lorsque l'angle formé par les moyens de détection avec la verticale diminue sous l'action de l'autre véhicule (C; C1), et un fluide sous pression pour permettre l'allongement du dispositif d'attelage (1) lorsque le clapet (8) est ouvert, caractérisé en ce que les moyens de détection (10; 110) comprennent au moins un arbre horizontal (14; 114) relié à la tringlerie (13; 113) et déplaçable axialement sur le véhicule remorquable (R; R1), perpendiculairement à l'axe longitudinal de celui-ci, et en ce que des moyens de rabattement (28, 30; 128, 130) sont prévus pour faire pivoter l'arbre horizontal (14; 114) autour de son axe longitudinal, de manière à rabattre les moyens de détection (10; 110) contre le véhicule remorquable (R; R1) lorsque l'arbre horizontal (14; 114) est déplacé axialement.

2. Véhicule remorquable selon la revendication 1, caractérisé en ce que l'arbre horizontal (14; 114) comporte deux surépaisseurs (19, 21) espacées axialement l'une de l'autre et deux bagues coulissantes (22, 23) insérées entre les surépaisseurs et contre lesquelles prend appui un ressort hélicoïdal comprimé (24; 124), les bagues (22, 23) s'appuyant contre les surépaisseurs (19, 21) et contre deux butées fixes (25, 26) lorsque l'arbre horizontal (14; 114) est dans sa position normale de repos.

3. Véhicule remorquable selon la revendication 1 ou 2, caractérisé en ce que les moyens de rabattement (28, 30; 128, 130) comprennent un galet (28; 128) prévu à l'extrémité libre d'une patte (27; 127) solidaire en rotation de l'arbre horizontal (14; 114), et une came fixe (30; 130) ayant une surface de came formée de deux tronçons (31, 32; 131, 132) ménageant un V entre eux, le galet (28; 128) faisant face au sommet du V tant que l'arbre horizontal (14; 114) n'est pas déplacé et faisant pivoter ce dernier, de manière à rabattre les moyens de détection (10; 110) contre la véhicule remorquable (R; R1), en coopérant avec l'un des tronçons (31, 32; 131, 132) de la surface de came lorsque l'arbre horizontal est déplacé dans un sens et avec l'autre tronçon de la surface de came lorsque l'arbre horizontal est déplacé dans l'autre sens.

4. Véhicule remorquable selon la revendication 3, caractérisé en ce que la patte (127) est portée par un manchon (126) monté à rotation sur l'arbre horizontal (114) et immobilisable sur ce dernier dans un certain nombre de positions prédéterminées.

5. Véhicule remorquable selon la revendication 4, caractérisé en ce que le manchon (126) est immobilisable sur l'arbre horizontal (114) par des moyens de verrouillage comprenant un élément fileté (151) traversant deux lumières oblongues (150) réalisées l'une en face de l'autre dans le manchon (126), perpendiculairement à l'axe de celui-ci, et un perçage diamétral (152) réalisé dans l'arbre horizontal (114), ainsi qu'un écrou (153) destiné à être vissé sur l'élément fileté (151) pour solidariser le manchon (126) et l'arbre horizontal (114).

6. Véhicule remorquable selon l'une quelconque des revendications 1 à 5, caractérisé en ce que l'arbre horizontal (14) est relié par au moins un bras (15a; 15b) à une tringle (16) qui lui est parallèle ou sensiblement parallèle et qui est pourvue à chacune de ses extrémités d'un galet de roulement (16a) dont l'axe de rotation est vertical ou sensiblement vertical.

7. Véhicule remorquable selon l'une quelconque des revendications 1 à 5, caractérisé en ce que l'arbre horizontal (114) supporte un bâti (115) qui lui est parallèle ou sensiblement parallèle et qui est pourvu d'un rouleau (116) à chacune de ses extrémités, les axes de rotation des rouleaux (116) étant perpendiculaires ou sensiblement perpendiculaires à l'arbre horizontal (114).

8. Véhicule remorquable selon la revendication 7, caractérisé en ce que les moyens de détection (110) comprennent deux arbres horizontaux (114) disposés l'un au-dessus de l'autre, les bâtis (115) supportés par ces arbres étant sensiblement symétriques par rapport à un plan horizontal.

9. Véhicule remorquable selon la revendication 8, caractérisé en ce que les moyens de rabattement (128, 130) des deux arbres horizontaux (114) sont situés dans l'espace ménagé entre ceux-ci.

**Patentansprüche**

1. Anhängefahrzeug (R; R1) mit einer an der Rückseite eines anderen Fahrzeugs (C; C1) ankoppelbaren, verlängerbaren Anhängevorrichtung (1), welche einen mit einem im Ruhezustand geschlossenen Ventil (8) versehenen Hydraulikkreis, eine längliche Abtasteinrichtung (10; 110), welche einen bestimmten Winkel mit der Senkrechten bildet, wenn die Längsachsen der beiden Fahrzeuge parallel zueinander sind, ein die Abtasteinrichtung (10; 110) mit dem Ventil (8) verbindendes Gestänge (13; 113), über welches das Ventil öffnend betätigbar ist, wenn sich der von der Abtasteinrichtung mit der Senkrechten gebildete Winkel unter Einwirkung des anderen Fahrzeugs (C; C1) verkleinert, und ein unter Druck stehendes Strömungsmittel aufweist, welches bei geöffnetem Ventil (8) eine Verlängerung der Anhängevorrichtung (1) gestattet, dadurch gekennzeichnet, daß die Abtasteinrichtung (10; 110) wenigstens eine mit dem Gestänge (13; 113) verbundene und senkrecht zur Längsachse des Anhängefahrzeugs (R; R1) axialverschieblich an diesem angebrachte Welle (14, 114) aufweist und daß ein Schwenkantrieb (28, 30; 128, 130) zum Verdrehen der waagerechten Welle (14, 114) um ihre Längsachse vorgesehen ist, derart, daß die Abtasteinrichtung (10; 110) bei einer Axialverschiebung der waagerechten Welle (14, 114) in Anlage an dem anderen Fahrzeug (C; C1) gehalten ist.

2. Anhängefahrzeug nach Anspruch 1, dadurch gekennzeichnet, daß die waagerechte Welle (14; 114) zwei in axialem Abstand zueinander angeordnete Abschnitte (19, 21) größeren Durchmessers aufweist, zwischen welchen zwei Ringe (22, 23) verschieblich auf der Welle angeordnet sind, zwischen denen eine Schraubenfeder (24; 124) unter Kompression gehalten ist, wobei sich die Ringe (22, 23) in der normalen Ruhestellung der waagerechten Welle (14; 114) an den Abschnitten (19, 21) größeren Durchmessers und an zwei feststehenden Anschlägen (25, 26) abstützen.

3. Anhängefahrzeug nach Anspruch 1 oder 2, dadurch gekennzeichnet, daß der Schwenkantrieb (28, 30; 128, 130) eine am freien Ende eines unverdrehbar mit der waagerechten Welle (14; 114) verbundenen Arms (27; 127) angeordnete Rolle (28; 128) und ein feststehendes Kämmglied (30; 130) mit einer aus zwei V-förmig zueinander angeordneten Abschnitten (31, 32; 131, 132) gebildeten Kämmfläche aufweist, wobei die Rolle (28; 128) eine Stellung am Scheitel der V-form einnimmt, wenn die waagerechte Welle (14; 114) nicht verschoben ist, und bei Verschiebung der waagerechten Welle in der einen oder anderen Richtung mit dem einen oder anderen Abschnitt (31 bzw. 32; 131 bzw. 132) der Kämmfläche zusammenwirkt, um die Abtasteinrichtung (10; 110) durch Verdrehung der waagerechten Welle in Anlage am anderen Fahrzeug (C; C1) zu halten.

4. Anhängefahrzeug nach Anspruch 3, dadurch gekennzeichnet, daß der Arm (127) an einer Buchse (126) befestigt ist, welche verdrehbar auf der waagerechten Welle (14; 114) gelagert und in einer bestimmten Anzahl von vorbestimmten Stellungen auf dieser festsetzbar ist.

5. Anhängefahrzeug nach Anspruch 4, dadurch gekennzeichnet, daß die Buchse (126) auf der waagerechten Welle (14; 114) mittels einer Feststelleinrichtung festsetzbar ist, welche ein zwei einander gegenüber lotrecht zur Achse der Buchse (126) in dieser ausgebildete Langlöcher (150) sowie eine in der waagerechten Welle (114) ausgebildete Diametralbohrung (152) durchsetzendes Gewindeelement (151) sowie eine Mutter (153) aufweist, welche zum Festsetzen der Buchse (126) auf der waagerechten Welle (114) auf dem Gewindeelement (151) festziehbar ist.

6. Anhängefahrzeug nach einem der Ansprüche 1 bis 5, dadurch gekennzeichnet, daß die waagerechte Welle (14) über wenigstens einen Arm (15a, 15b) mit einer zu ihr parallelen Stange (16) verbunden ist, welche an jedem Ende mit einer Laufrolle (16a) versehen ist, deren Drehachse senkrecht oder im wesentlichen senkrecht steht.

7. Anhängefahrzeug nach einem der Ansprüche 1 bis 5, dadurch gekennzeichnet, daß die waagerechte Welle (114) einen zu ihr parallelen oder im wesentlichen parallelen Rahmen (115) trägt, welcher an jedem Ende mit einer Rolle (116) versehen ist, wobei die Drehachsen der Rollen (116) lotrecht oder im wesentlichen lotrecht zur waagerechten Welle (114) angeordnet sind.

8. Anhängefahrzeug nach Anspruch 7, dadurch gekennzeichnet, daß die Abtasteinrichtung (110) zwei übereinander angeordnete waagerechte Wellen (114) aufweist und daß die von den Wellen getragenen Rahmen (115) in bezug auf eine waagerechte Ebene im wesentlichen symmetrisch sind.

9. Anhängefahrzeug nach Anspruch 8, dadurch gekennzeichnet, daß die Schwenkantriebe (128, 130) der beiden waagerechten Wellen (114) in dem zwischen diesen vorhandenen Raum angeordnet sind.

## Claims

1. A towable vehicle (R; R1) comprising an extensible hitching device (1) connectable to the rear of a further vehicle (C; C1), said hitching device having a hydraulic circuit with a normally closed check valve (8), elongated detection means (10; 110) forming a given angle with the vertical line when the longitudinal axes of the two vehicles are parallel, a linkage (13; 113) connecting the detection means (10; 110) to the check valve (8) and able to open the latter when the angle formed by the detection means with the vertical line decreases under the action of the further vehicle (C; C1), and a fluid under pressure to allow the lengthening of the hitching device (1) when the check valve (8) is open, characterized in that the detection means (10; 110) comprise at least one horizontal shaft (14; 114) connected to the linkage (13; 113) and movable axially on the towable vehicle (R; R1), perpendicularly to the longitudinal axis thereof, and in that tilting means (28, 30; 128, 130) are provided to pivot the horizontal shaft (14; 114) around its longitudinal axis, so as to tilt the detection means (10; 110) back to the towable vehicle (R; R1) when the horizontal shaft (14; 114) is moved axially.

2. The towable vehicle according to claim 1, characterized in that the horizontal shaft (14; 114) comprises two axially spaced apart bosses (19, 21) and two sliding rings (22, 23) inserted between the bosses and against which a compressed helical spring (24; 124) is seated, whereby the rings (22, 23) bear on the bosses (19, 21) and on two fixed abutments (25, 26) when the horizontal shaft (14; 114) is in its normal rest position.

3. The towable vehicle according to claim 1 or 2, characterized in that the tilting means (28, 30; 128, 130) comprise a roller (28; 128) provided at the free end of a bracket (27; 127) integrally rotatable with the horizontal shaft (14; 114), and a fixed cam (30; 130) with a cam surface formed of two sections (31, 32; 131, 132) providing a V therebetween, whereby the roller (28; 128) faces the top of the V as long as the horizontal shaft (14; 114) is not moved, and pivots the latter so as to tilt the detection means (10; 110) back to the towable vehicle (R; R1) in cooperation with one section (31, 32; 131, 132) of the cam surface when the horizontal shaft is moved in one direction and with the other section of the cam surface when the horizontal shaft is moved in the other direction.

4. The towable vehicle according to claim 3, characterized in that the bracket (127) is carried by a sleeve (126) rotatably mounted on the horizontal shaft (114) and which may be fixed on the latter in a number of predetermined positions.

5. The towable vehicle according to claim 4, characterized in that the sleeve (126) may be fixed on the horizontal shaft (114) by locking means comprising a screw threaded element (151) passing through two elongated holes (150) provided opposite to each another in the sleeve (126), perpendicularly to the axis thereof, and through a diametrical bore (152) formed in the horizontal shaft (114), as well as a nut (153) to be screwed on the screw

threaded element (151) to make the sleeve (126) integral with the horizontal shaft (114).

6. The towable vehicle according to any of claims 1 to 5, characterized in that the horizontal shaft (14) is coupled through at least one arm (15a; 15b) to a link (16) parallel or substantially parallel thereto and provided at each end with a track roller (16a) the rotational axis of which is vertical or substantially vertical.

7. The towable vehicle according to any of claims 1 to 5, characterized in that the horizontal shaft (114) supports a frame (115) parallel or substantially parallel thereto and provided with a roll (116) at each end, whereby the rotational axes of the rolls (116) are perpendicular or substantially perpendicular to the horizontal shaft (114).

8. The towable vehicle according to claim 7, characterized in that the detection means (110) comprise two horizontal shafts (114) disposed one above the other, whereby the frames (115) supported by said shafts are substantially symmetrical with respect to a horizontal plane.

9. The towable vehicle according to claim 8, characterized in that the tilting means (128, 130) of the two horizontal shafts (114) are located in the space provided therebetween.

## FIG. 1

## FIG. 4

FIG.2

EP 0 223 640 B1

## FIG. 3

## FIG.5

# FIG.6

# FIG.7

EP 0 223 640 B1

FIG.8

FIG.9

FIG.10

EP 0 223 640 B1